# EUROPÄISCHE PATENTSCHRIFT

(11) **EP 2 514 614 B1**
(45) Veröffentlichungstag und Bekanntmachung des Hinweises auf die Patenterteilung: **10.04.2013**
(21) Anmeldenummer: 11184690.3
(22) Anmeldetag: 11.10.2011
(51) Int. Cl.: B60C 27/12

(54) **Reifenkette mit gemeinsam umhüllten, zugmittelähnlichen Halteorganen**
Tyre chain with jointly encased holding means for tensioning
Chaîne de pneu dotée d'organes de retenue enveloppés ensemble et similaires à des moyens de traction

(30) Priorität: 19.04.2011 DE 102011002178
(43) Veröffentlichungstag der Anmeldung: 24.10.2012
(73) Patentinhaber: RUD Ketten Rieger & Dietz GmbH u. Co. KG, 73432 Aalen (DE)
(72) Erfinder: Grimm, Anton, 73479 Ellwangen (DE); Schmidle, Reinhold, 73432 Aalen (DE)
(74) Vertreter: Grünecker, Kinkeldey, Stockmair & Schwanhäusser

(56) Entgegenhaltungen:
- EP-A1- 1 752 320
- EP-A1- 1 775 149
- JP-A- 2002 114 013
- US-A- 4 862 935

## Beschreibung

Die Erfindung betrifft eine Reifenkette zur Anbringung an einem Fahrzeugreifen, mit wenigstens einem Traktionsabschnitt, der bei an dem Fahrzeugreifen angebrachter Reifenkette auf einer Lauffläche des Fahrzeugreifens aufliegt, und mit wenigstens einer mit dem Traktionsabschnitt verbundenen Halteeinrichtung, die bei an dem Fahrzeugreifen angebrachter Reifenkette wenigstens abschnittsweise auf einer Flanke des Fahrzeugreifens aufliegt und sich zumindest abschnittsweise in Umfangsrichtung des Fahrzeugreifens erstreckt, wobei die Halteeinrichtung im Querschnitt wenigstens zwei bei an dem Fahrzeugreifen angebrachten Fahrzeugreifen nebeneinander liegende, zugmittelförmige Halteorgane aufweist.

Eine derartige Reifenkette ist aus der EP 1 775 149 A1 bekannt.

Ähnliche Reifenketten finden beispielsweise als Gleitschutzketten oder Gleitschutzvorrichtungen, hier insbesondere als Schneeketten, oder als Reifenschutzketten Anwendung. Ist die Reifenkette auf dem Fahrzeugreifen montiert, so liegt der Traktionsabschnitt auf der Lauffläche des Fahrzeugreifens auf. Im Bereich der Reifenaufstandsfläche, auf der der Fahrzeugreifen auf dem Untergrund ruht oder abrollt, befindet sich der Traktionsabschnitt zwischen Lauffläche und Untergrund. Der Traktionsabschnitt dient bei Gleitschutzketten dazu, die Traktion auf rutschigen Untergründen, wie Morast, Matsch, Schnee und/oder Eis, zu erhöhen. Bei Reifenschutzketten schützt der Traktionsabschnitt die Lauffläche vor Beschädigung durch beispielsweise scharfkantige und/oder heiße Gegenstände und, beispielsweise Schlacke, stellt gleichzeitig eine ausreichende Traktion zur Verfügung.

Der Traktionsabschnitt kann Kettenstränge oder einzelne Ketten- und/oder Stegglieder aufweisen, die im montierten Zustand auf der Lauffläche aufliegen. Die Ketten- oder Stegglieder und hieraus gebildete Kettenstränge des Traktionsabschnittes können zu einem Laufnetz verbunden sein. Der Traktionsabschnitt kann aber auch Textilmaterial aufweisen und bei bestimmten Arten von Schneeketten ausschließlich aus einem textilen Mantel gefertigt sein.

Damit sich der Traktionsabschnitt eng im Betrieb an die Lauffläche anlegt, lässt er sich bevorzugt ringförmig zu einem Durchmesser aufspannen, der geringfügig größer als der Reifendurchmesser ist. Seitlich, also in axialer Richtung, d.h. in Richtung der Drehachse des Fahrzeugreifens, schließt sich an wenigstens einer Seite des Traktionsabschnittes der Halteeinrichtung an. Da im montierten Zustand der Flanke der Fahrzeugreifen anliegt und sich zumindest abschnittsweise entlang der Reifenflanke in Umfangsrichtung erstreckt, verhindert er, dass die Reifenkette im Betrieb vom Fahrzeugreifen beispielsweise bei Kurvenfahrten seitlich abfallen kann.

Die EP 1 752 320 A1 zeigt eine Schneekette mit elastischem Montagesystem. In der US 4 862 935 ist ein Befestigungssystem für Gleitschutzketten mit einem umhüllten Spannelement gezeigt. Ferner zeigt die JP 2002 114013 A eine Gleitschutzkette, bei der ein Haltemittel von Plastikringen umhüllt ist.

Die Montage von Reifenketten ist trotz einer Vielzahl von konstruktiven Bemühungen auf Seiten der Entwickler nach wie vor kompliziert, vor allem, wenn sie unter widrigen Umweltbedingungen vorgenommen werden muss und die Bedienperson beispielsweise Handschuhe trägt. Problematisch bei den Reifenketten ist außerdem, dass bei modernen Fahrzeugen nur wenig Platz auf der Radinnenseite zwischen dem Radkasten und der Reifenflanke zur Verfügung steht. Gleichzeitig muss die Halteeinrichtung gerade bei breiten Reifen beim Einschlagen der Räder größere Kräfte auffangen, um die Reifenkette sicher an dem Fahrzeugrad zu halten.

Der Erfindung liegt somit die Aufgabe zugrunde, die bekannten Reifenketten dahingehend zu verbessern, dass sie auch dann noch montiert werden können, wenn an der der Karosserie zugewandten Reifeninnenseite nur wenig Platz zur Verfügung steht und trotzdem große Haltekräfte aufgebracht werden müssen.

Diese Aufgabe wird erfindungsgemäß für die eingangs genannte Reifenkette dadurch gelöst, dass die wenigstens zwei bei an dem Fahrzeugreifen angebrachter Reifenkette in radialer Richtung des Fahrzeugreifens nebeneinander liegenden, zugmittelförmigen Halteorgane gemeinsam umhüllt sind.

Durch die erfindungsgemäße Halteeinrichtung mit ihren im Querschnitt in radialer Richtung nebeneinander liegenden Halteorganen wird eine geringe Bauhöhe über der Reifenflanke bei hohen Spannkräften, die sich auf die beiden Halteorgane verteilen, erreicht. Die gemeinsame Umhüllung stellt dabei sicher, dass die Handhabung bei der Montage einfach bleibt, da sich die einzelnen Halteorgane nicht im Reifenprofil verheddern können, sondern stets zusammen handzuhaben sind. Ferner wird durch diese Ausgestaltung die Betriebssicherheit erhöht, da bei Beschädigung eines Halteorgans zumindest ein weiteres Halteorgan einsatzbereit bleibt und die Reifenkette hält.

Wie nachstehend erläutert ist, kann die Erfindung durch weitere, jeweils für sich vorteilhafte und beliebig miteinander kombinierbare Ausgestaltungen weiter verbessert werden.

Das Halteorgan dient beispielsweise als Spannmittel in Form einer Spannkette, eines Spanngurtes, -riemens, -seiles oder -bügels dazu, den Traktionsabschnitt über die Lauffläche zu spannen. Hierzu kann bei auf den Reifen aufgezogener Reifenkette vom Halteorgan eine in radialer Richtung nach innen zur Achse des Fahrzeugreifens weisende Kraft auf den Traktionsabschnitt ausgeübt werden.

Das Halteorgan kann zumindest abschnittsweise elastisch dehnbar sein, so dass den Traktionsabschnitt durch Federkraft spannt. Zum Spannen des Halteorgans kann die Halteeinrichtung auch eine mechanische Spannvorrichtung, beispielsweise eine Winde oder Ratsche oder ein separates Federelement aufweisen.

Gemäß einer weiteren vorteilhaften Ausgestaltung können die Halteorgane durch die Umhüllung in ihrer nebeneinander angeordneten Lage relativ zueinander fixiert sein. Bei dieser Ausgestaltung sorgt die Umhüllung also dafür, dass die Halteorgane stets die gleiche Relativposition zueinander einhalten. Dadurch wird ein Verdrillen der Halteorgane in der Umhüllung vermieden und es wird sichergestellt, dass sich die nebeneinander liegenden Halteorgane nicht auf der Reifenflanke aufstellen können. Die Lagefixierung nebeneinander schließt vorteilhafterweise nicht aus, dass die Halteorgane in ihrer Längsrichtung relativ zueinander beweglich sind.

Die Halteorgane können gemäß einer weiteren vorteilhaften Ausgestaltung in wenigstens einer Hülse aufgenommen sein, die einen Querschnitt mit einer Längs- und einer Schmalseite aufweist. Bei an dem Fahrzeugreifen montierter Reifenkette ist die Längsseite der Hülse dabei bevorzugt parallel zur Reihenflanke orientiert. Diese Formgebung der Hülse stellt eine niedrige Bauhöhe auf der Reifenflanke sicher.

Wenn die Hülse aus einem starren Material gefertigt ist, wie beispielsweise einem Kunststoff, so kann sie die von ihr umhüllten Halteorgane gegen Beschädigung schützen.

Durch eine im Querschnitt im Wesentlichen ellipsenförmige Außenkontur der Hülse ist die Hülse bei flacher Bauweise gut gegen Beschädigungen geschützt, da keine bruch- oder verformungsempfindlichen Kanten vorhanden sind. Gleichzeitig liegt eine ellipsenförmige Hülse gut in der Hand, was die Montagefreundlichkeit verbessert. Die abgerundete Form lässt sich zudem bei der Montage und Demontage einfacher über das Reifenprofil schieben, da sich keine Kanten im Reifenprofil verfangen können.

Die Halteorgane können gegenüber der Hülse in ihrer Längsrichtung beweglich in der Hülse aufgenommen sein, so dass die Hülse den Spannvorgang nicht beeinflusst. Bei einem elastisch dehnbaren Halteorgan, wie beispielsweise einem Gummiseil, ermöglicht die relative Beweglichkeit zwischen Hülse und Halteorganen das Spannen und Längen der Halteorgane bei der Montage.

Entlang der Halteorgane können mehrere relativ zueinander bzw. unabhängig voneinander bewegliche Hülsen angeordnet sein, so dass die Flexibilität der Halteorgane erhalten bleibt. Wird nämlich das Halteorgan abgeknickt oder gekrümmt, so können die Hülsen abgeknickt oder gekrümmten Verlauf durch ihre relative Beweglichkeit selbst dann folgen, wenn sie starr sind.

Gemäß einer weiteren vorteilhaften Ausgestaltung kann die Länge der Halterorgane im ungedehnten Zustand kleiner sein als die Gesamtlänge der auf den Halteorganen angeordneten Hülsen. Bei dieser Ausgestaltung werden die Halteorgane automatisch gedehnt, wenn sie in den Hülsen aufgenommen sind und der von den umhüllten Halteorganen gebildete Kreis umschlossen wird. Die Vorspannkraft führt zu einer sicheren Positionierung der Reifenkette. In die Gesamtlänge der Hülsen kann auch die Länge der Laschen in Längsrichtung der Halteorgane an den Haltestellen eingerechnet sein.

Um ein Aufstellen der Hülsen auf der Reifenflanke und damit Kollisionen mit dem Radkasten zu verhindern, sind die Hülsen vorzugsweise verdrehsicher auf den Halteorganen und insbesondere verdrehsicher gegeneinander angebracht. Hierbei kommt es insbesondere auf die Verdrehsicherheit um eine in Längsrichtung der Halteorgane weisende Achse an.

An wenigstens einem Ende der Hülse kann ein mit dem Ende einer anderen Hülse in Eingriff bringbares oder in Eingriff stehendes Zentriermittel vorgesehen sein. Beispielsweise kann sich der Querschnitt in Längsrichtung an wenigstens dem Ende, das die Öffnung für die Halteorgane aufweist, verjüngen, so dass das Ende der Hülse in das Ende der benachbarten Hülse eintauchen kann. Dies kann beispielsweise durch eine Fase am Ende der Hülse oder durch wenigstens außen kegelstumpfförmige Hülsen erreicht werden.

Die im Querschnitt der Halteeinrichtung vorliegenden Halteorgane können aus wenigstens einem elastischen Seil aufgebaut sein. Das wenigstens eine elastische Seil kann spiralförmig in Umfangsrichtung in mehreren Wicklungen verlaufen, die nebeneinander liegen und im Querschnitt die nebeneinander liegenden Halteorgane bilden.

Im Folgenden ist die Erfindung anhand eines Ausführungsbeispiels mit Bezug auf die beigefügten Zeichnungen näher erläutert. Die bei dem Ausführungsbeispiel beschriebene und dargestellte Merkmalskombination kann nach Maßgabe der obigen Ausführungen innerhalb des beanspruchten Gegenstandes beliebig geändert werden, sollte es in einem speziellen Anwendungsfall auf den mit einem Merkmal verbundenen Vorteil nicht ankommen.

Es zeigen:
- Fig. 1: eine schematische Draufsicht auf eine Innenseite eines Reifens mit einer Reifenkette;
- Fig. 2: das Detail II der Fig. in einer schematischen Darstellung;
- Fig. 3: den Schnitt III-III der Fig. 2 in einer schematischen Schnittdarstellung.

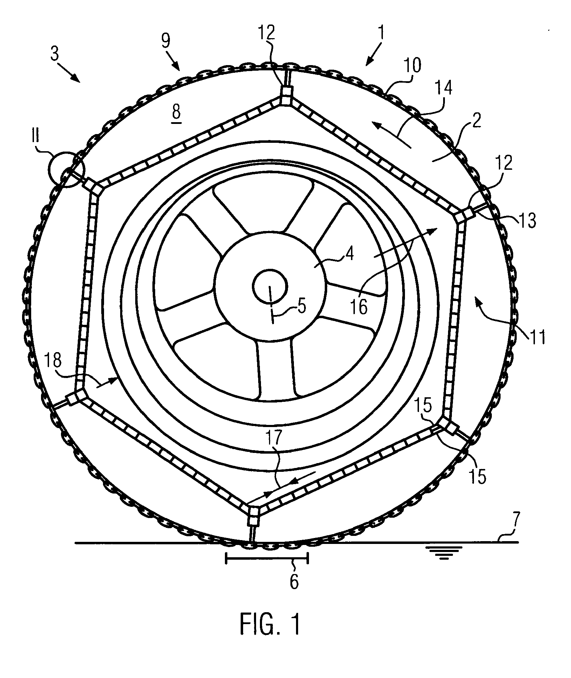

Zunächst wird der Aufbau einer erfindungsgemäßen Reifenkette 1 mit Bezug auf die Fig. 1 erläutert. In Fig. 1 ist die Reifenkette 1 auf einen Fahrzeugreifen 2 aufgezogen dargestellt. Der Fahrzeugreifen 2 ist Teil eines Fahrzeugrades 3, bei dem der Fahrzeugreifen auf eine Felge 4 montiert ist. Das Fahrzeugrad 3 mit dem Fahrzeugreifen 2 ist um eine Achse 5 drehbar. Im Bereich einer Reifenaufstandsfläche 6 liegt der Fahrzeugreifen 2 auf einem Untergrund 7 auf.

In Fig. 1 ist der Blick auf eine innere Reifenflanke 8 gerichtet, die einem Radkasten (nicht gezeigt) bzw. einer Karosserie (nicht gezeigt) zugewandt ist.

Die Reifenkette 1 weist einen beispielsweise ringförmig aufspannbaren Traktionsabschnitt 9 auf, der auf einer Lauffläche 10 des Fahrzeugreifens 2 aufliegt und sich im Bereich der Reifenaufstandsfläche 6 zwischen dem Fahrzeugreifen 2 und dem Untergrund 7 befindet.

Ferner weist die Reifenkette 1 eine Halteeinrichtung 11 auf, die bei an dem Fahrzeugreifen angebrachter Reifenkette wenigstens abschnittsweise auf der Flanke 8 des Fahrzeugreifens aufliegt. Die Halteinrichtung 11 auf der inneren Reifenflanke sichert die Reifenkette 1 gegen ein Abfallen in Richtung der Achse 5 nach außen.

Die Halteeinrichtung 11 ist mit dem Traktionsabschnitt 9 verbunden. An den Haltestellen können sich von der Reifenflanke 8 zur Lauffläche 10 erstreckende Befestigungsmittel 13 in Form biegeschlaffer Zugmittel, wie Gurte, Seile oder Kettenstränge oder in Form von starren oder mit Gelenkverbindungen versehenen Bügeln erstrecken.

Entlang der Reifenflanke 8 erstreckt sich die Halteeinrichtung 11 im Wesentlichen in eine Umfangsrichtung 14. Insbesondere kann die Halteeinrichtung im Wesentlichen sekantenförmig von einer Haltestelle 12 zur in Umfangsrichtung benachbarten Haltestelle 12 verlaufen.

Die Halteeinrichtung 11 weist eine Mehrzahl von zugmittelförmigen Halteorganen 15 auf, die bei an dem Fahrzeugreifen 2 angebrachter Reifenkette in einen Querschnitt in radialer Richtung 16, also parallel zur Reifenflanke 8 nebeneinander liegen.

Bei auf dem Fahrzeugreifen 2 angebrachter Reifenkette 1 wirkt in den Halteorganen 15 eine Spannkraft 17, die an den Haltestellen 12 zu einer radial nach innen gerichteten Haltekraft 18 führt, die wiederum den Traktionsabschnitt 9 in Richtung der Achse 5 über die Lauffläche 2 spannt.

Auf der in Fig. 1 nicht dargestellten äußeren Reifenflanke ist eine weitere Halteeinrichtung (nicht gezeigt) angeordnet, welche der Halteeinrichtung 11 entgegenwirkt und eine in der Haltekraft 18 entgegenwirkenden Haltekraft (nicht gezeigt) erzeugt.

Zur Erzeugung der Spannkraft 17 und damit der Haltekraft 18 kann die Halteeinrichtung 11 Spannmittel, wie beispielsweise eine Feder oder eine Ratsche oder Winde, aufweisen. Bei der Ausführungsform der Fig. 1 ist, lediglich beispielhaft, jedes Halteorgan bei auf dem Fahrzeugreifen 2 gezogener Reifenkette 1 elastisch gedehnt, so dass die Spannkraft 17 aufgrund der elastischen Dehnung der Halteorgane 15 erzeugt wird.

Die nebeneinander liegenden Halteorgane 15 sind gemeinsam umhüllt, so dass sie nicht voneinander getrennt und gemeinsam handgehabt werden können.

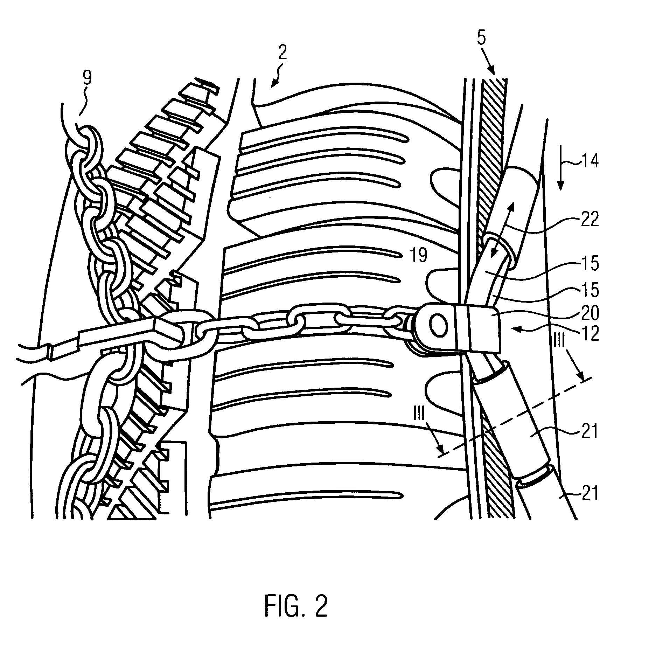

Dies ist im Folgenden näher mit Bezug auf die Fig. 2 erläutert, in der das Detail II der Fig. 1 vergrößert dargestellt ist.

In Fig. 2 sind die nebeneinander parallel zur Reifenflanke 5 liegenden Halteorgane 15 deutlich zu erkennen. Es sind mindestens zwei nebeneinander liegende Halteorgane 15 vorhanden.

An den Haltestellen 12 können die Halteorgane 15 in Umfangsrichtung durch eine Öffnung 19 einer Haltelasche 20 geführt sein. In ihrer Längsrichtung sind die Halteorgane 15 bevorzugt gegenüber der Haltelasche 20 beweglich, um eine im Umfangsrichtung 14 ungleich verteilte Spannkraft durch Bewegungen ausgleichen zu können. Die Haltelasche 20 ist gegenüber dem Traktionsabschnitt 9 der Reifenkette 1 vorzugsweise in Umfangsrichtung beweglich, um die Beweglichkeit der Halteorgane 15 in Umfangsrichtung zu erhöhen.

Die nebeneinander liegenden Halteorgane 15 sind gemeinsam in einer oder mehreren Hülsen 21 geführt. Wie Fig. 2 zeigt, können in Längsrichtung 22 der Halteorgane 15 mehrere Hülsen 21 hintereinander auf den Halteorganen 15 aufgereiht sein.

Die Halteorgane 15 sind in den Hülsen 21 in Längsrichtung 22 beweglich gehalten. Die Hülsen 21 selbst sind auf den Halteorganen 15 vorzugsweise relativ zueinander beweglich, so dass die Halteorgane 15 beim Aufziehen der Reifenkette 1 auf dem Fahrzeugreifen 2 gebogen und/oder geknickt werden können und die Hülsen diesen Bewegungen folgen können. Außerdem kann beim Verstauen die Reifenkette 1 aufgrund der gegeneinander beweglichen Hülsen 21 beliebig geknautscht werden.

Die Längsbeweglichkeit zwischen Halteorganen 15 und Hülsen 21 stellt sicher, dass sich die Halteorgane 15 in den Hülsen dehnen können. Die Hülsen 21 können zusätzlich oder alternativ auch in Längsrichtung der Halteorgane 5 relativ zueinander beweglich auf den Halteorganen 15 gehalten sein, damit die Halteorgane 15 leichter dehnbar sind. Die Hülsen 21 dienen ferner als Abstandshalter, um die Haltestellen 12 schon vor dem Aufziehen der Reifenkette 1 auf den Fahrzeugreifen 2 an den oder in der Nähe der Positionen zu positionieren, an denen sie im montierten Zustand zu liegen kommen. Dies erleichtert die Montage.

Die Gesamtlänge der auf den Halteorganen 15 aufgereihten Hülsen 21 in Umfangsrichtung ist größer als die Länge der Halteorgane 15 im ungedehnten Zustand. Wenn, wie in Fig. 1 gezeigt, die Halteorgane 15 zu einem Kreis geschlossen sind, führt die Längendifferenz automatisch zur Erzeugung einer Vorspannkraft in den Halteorganen 15. Durch die Vorspannkraft zentriert sich die Reifenkette von selbst.

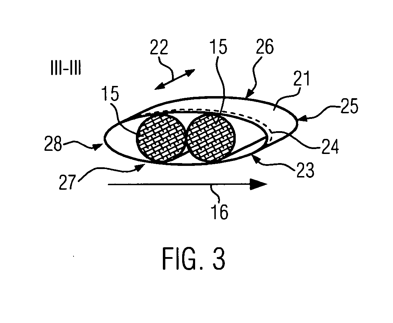

Figur 3 zeigt einen Querschnitt III-III quer zur Längsrichtung 22 durch eine Hülse 21 mitsamt den Halteorganen 15. Im Querschnitt können demnach zwei Halteorgane 15 nebeneinander in radialer Richtung 16 bzw. parallel zur Reifenflanke 8 (vgl. Fig. 1, 2) angeordnet sein. Dabei kommt es nicht darauf an, ob die beiden im Querschnitt nebeneinander liegenden Halteorgane 15 beispielsweise durch ein einziges spiralförmig gewickeltes Halteorgan oder durch mehrere separate parallel laufende Halteorgane erzeugt werden.

Die Hülsen 21 können an wenigstens einem in Längsrichtung 22 gelegenen Ende 23 mit einem in Fig. 3 gestrichelt dargestellten Zentriermittel 24 versehen sein, das in ein komplementär ausgestaltetes Zentriermittel 25 am in Längsrichtung 22 anderen Ende 26 eingreifen kann und die Hülsen 21, vorzugsweise ohne sie in ihrer Relativbeweglichkeit zueinander einzuschränken, in Richtung quer zur Längsrichtung 22 in Flucht zueinander positioniert.

Als Zentriermittel 24 kann beispielweise ein sich fasenartig verjüngender Querschnitt in Form einer in Längsrichtung 22 zulaufenden Kegelstumpfmantelfläche vorgesehen sein. Alternativ oder zusätzlich kann sich auch die gesamte Hülse in Längsrichtung 22 kegelstumpfartig weiten, so dass in das geweitete Ende 26 der einen Hülse das verjüngte Ende 24 einer anderen Hülse eingesetzt werden kann.

Die Hülse 21 weist im Querschnitt eine Längsseite 24 und eine Schmalseite 28 auf. Die Längsseite 27 verläuft im Wesentlichen parallel zur Reifenflanke 8 (vgl. Fig. 2) und liegt an dieser bei montierter Reifenkette auf. Die Schmalseite 28 liegt quer zur Reifenflanke 8.

### Bezugszeichen

- 1: Reifenkette
- 2: Fahrzeugreifen
- 3: Fahrzeugrad
- 4: Felge
- 5: Achse
- 6: Reifenaufstandsfläche
- 7: Untergrund
- 8: innere Reifenflanke
- 9: Traktionsabschnitt
- 10: Lauffläche
- 11: Halteeinrichtung
- 12: Haltestellen
- 13: Befestigungsmittel
- 14: Umfangsrichtung
- 15: Halteorgan
- 16: radiale Richtung
- 17: Spannkraft
- 18: Haltekraft
- 19: Öffnung
- 20: Haltelasche
- 21: Hülse
- 22: Längsrichtung
- 23: Ende einer Hülse
- 24: Zentriermittel
- 25: komplementäres Zentriermittel
- 26: anderes Ende einer Hülse
- 27: Längsseite einer Hülse
- 28: Schmalseite einer Hülse

## Patentansprüche

1. Reifenkette (1) zur Anbringung an einem Fahrzeugreifen (2), mit wenigstens einem Traktionsabschnitt (9), der bei an dem Fahrzeugreifen (2) angebrachter Reifenkette (1) auf einer Lauffläche (10) des Fahrzeugreifens (5) aufliegt, und mit wenigstens einer mit dem Traktionsabschnitt (9) verbundenen Halteeinrichtung (11), die bei an dem Fahrzeugreifen (2) angebrachter Reifenkette (1) wenigstens abschnittsweise auf einer Flanke (8) des Fahrzeugreifens (5) aufliegt und sich zumindest abschnittsweise in Umfangsrichtung (14) des Fahrzeugreifens (2) erstreckt, wobei die Halteeinrichtung im Querschnitt wenigstens zwei bei an dem Fahrzeugreifen (2) angebrachter Reifenkette (1) in radialer Richtung (16) des Fahrzeugreifens (2) nebeneinander liegende, zugmittelförmige Halteorgane (15) aufweist, **dadurch gekennzeichnet, dass** die wenigstens zwei bei an dem Fahrzeugreifen (2) angebrachter Reifenketten (1) in radialer Richtung (16) des Fahrzeugreifens (2) nebeneinander liegenden zugmittelförmigen Halteorgane (15) gemeinsam umhüllt sind.

2. Reifenkette (1) nach Anspruch 1, **dadurch gekennzeichnet, dass** die Halteorgane (15) durch die Umhüllung in ihrer nebeneinander angeordneten Lage relativ zueinander fixiert sind.

3. Reifenkette (1) nach Anspruch 1 oder 2, **dadurch gekennzeichnet, dass** die Halteorgane (15) in wenigstens einer Hülse (21) aufgenommen sind, die einen Querschnitt mit einer Längsseite (27) und einer Schmalseite (28) aufweist, und dass bei an dem Fahrzeugreifen (2) montierter Reifenkette (1) die Längsseite (27) parallel zur Reifenflanke (8) orientiert ist.

4. Reifenkette (1) nach Anspruch 3, **dadurch gekennzeichnet, dass** die Hülse (21) aus einem starren Material gefertigt ist.

5. Reifenkette (1) nach einem der Ansprüche 3 bis 4, **dadurch gekennzeichnet, dass** die wenigstens eine Hülse (21) im Querschnitt eine im Wesentlichen ellipsenförmige Außenkontur aufweist.

6. Reifenkette (1) nach einem der Ansprüche 3 bis 5, **dadurch gekennzeichnet, dass** die Halteorgane (15) in ihrer Längsrichtung (22) beweglich in der Hülse (21) aufgenommen sind.

7. Reifenkette (1) nach einem der Ansprüche 3 bis 6, **dadurch gekennzeichnet, dass** entlang der Halteorgane (15) mehrere relativ zueinander bewegliche Hülsen angeordnet sind.

8. Reifenkette (1) nach einem der Ansprüche 2 bis 7, **dadurch gekennzeichnet, dass** die Hülse (21) bezüglich einer Drehung um die Längsachse (22) verdrehsicher auf den Halteorganen (15) sitzt.

9. Reifenkette (1) nach einem der Ansprüche 3 bis 8, **dadurch gekennzeichnet, dass** an wenigstens einem Ende (23) der Hülse (21) ein mit dem Ende (26) einer anderen Hülse (21) in Eingriff bringbares Zentriermittel (24) vorgesehen ist.

10. Reifenkette (1) nach einem der Ansprüche 1 bis 9, **dadurch gekennzeichnet, dass** die im Querschnitt der Halteeinrichtung (11) nebeneinander liegenden Halteorgane (15) aus wenigstens einem elastisch dehnbaren Seil aufgebaut sind.

11. Reifenkette (1) nach einem der Ansprüche 3 bis 6 und einem der Ansprüche 7 bis 10, **dadurch gekennzeichnet, dass** die Länge der Halteorgane (15) im ungedehnten Zustand kleiner ist als die Gesamtlänge der auf den Halteorganen (15) angeordneten Hülsen (21).

12. Reifenkette (1) nach einem der Ansprüche 1 bis 10, **dadurch gekennzeichnet, dass** das Halteorgan (15) ein Spannmittel ist.

13. Reifenkette (1) nach einem der Ansprüche 1 bis 11, **dadurch gekennzeichnet, dass** das Halteorgan (15) zumindest abschnittsweise elastisch dehnbar ist.

14. Reifenkette (1) nach einem der Ansprüche 1 bis 12, **dadurch gekennzeichnet, dass** das Halteorgan (15) eine mechanische Spannvorrichtung aufweist.

15. Reifenkette (1) nach einem der Ansprüche 1 bis 13, **dadurch gekennzeichnet, dass** die Hülsen (21) gegeneinander verdrehsicher sind.

## Claims

1. Tyre chain (1) to be mounted to a vehicle tyre (2), comprising at least one traction section (9) which rests, with the tyre chain (1) being mounted to the vehicle tyre (2), on a tread (10) of the vehicle tyre (5), and at least one retaining means (11) which is connected to the traction section (9) and, with the tyre chain (1) being mounted to the vehicle tyre (2), rests at least section-wise on a sidewall (8) of the vehicle tyre (5) and extends at least section-wise in circumferential direction (14) of the vehicle tyre (2), the retaining means in a cross-section having at least two traction-means-like retaining members (15) that are adjacently positioned in radial direction (16) of the vehicle tyre (2) when the tyre chain (1) is being mounted to the vehicle tyre (2) **characterised in that** the at least two traction-means-like retaining members (15), that are adjacently positioned in radial direction (16) of the vehicle tyre (2) when the tyre chain (1) is being mounted to the vehicle tyre (2), are commonly sheathed.

2. Tyre chain (1) according to claim 1, **characterised in that** the retaining members (15) are fixed relative to each other in their adjacent position by the sheathing.

3. Tyre chain (1) according to claim 1 or 2, **characterised in that** the retaining members (15) are accommodated in at least one sleeve (21), the cross-section thereof comprising a long side (27) and a narrow side (28), and that the long side (27) is oriented parallel to the tyre sidewall (8), when the tyre chain (1) is being mounted to the vehicle tyre (2).

4. Tyre chain (1) according to claim 3, **characterised in that** the sleeve (21) is made of a rigid material.

5. Tyre chain (1) according to any of claims 3 to 4, **characterised in that** the at least one sleeve (21) has in a cross-section an outer contour that is substantially elliptic.

6. Tyre chain (1) according to any of claims 3 to 5, **characterised in that** the retaining members (15) are accommodated in the sleeve (21) in such a way that they are moveable in their longitudinal direction (22).

7. Tyre chain (1) according to any of claims 3 to 6, **characterised in that** a multitude of sleeves moveable relative to each other are arranged along the retaining members (15).

8. Tyre chain (1) according to any of claims 2 to 7, **characterised in that** the sleeve (21) rests on the retaining members (15) in a torsion-proof manner with regard to a rotation about the longitudinal axis (22).

9. Tyre chain (1) according to any of claims 3 to 8, **characterised in that** at at least one end (23) of the sleeve (21) a centering means (24) is provided which can be brought into meshing engagement with the end (26) of another sleeve (21).

10. Tyre chain (1) according to any of claims 1 to 9, **characterised in that** the retaining members (15) adjacently positioned in the cross-section of the retaining means (11) are constructed of at least one elastically expandable rope.

11. Tyre chain (1) according to any of claims 3 to 6 and any of claims 7 to 10, **characterised in that** the length of the retaining members (15) in the non-expanded state, is smaller than the overall length of the sleeves (21) positioned on the retaining members (15).

12. Tyre chain (1) according to any of claims 1 to 10, **characterised in that** the retaining member (15) is a tensioning means.

13. Tyre chain (1) according to any of claims 1 to 11, **characterised in that** the retaining member (15) is at least section-wise elastically expandable.

14. Tyre chain (1) according to any of claims 1 to 12, **characterised in that** the retaining member (15) comprises a mechanical tensioning means.

15. Tyre chain (1) according to any of claims 1 to 13, **characterised in that** the sleeves (21) are torsion-proof relative to each other.

## Revendications

1. Chaîne de pneu (1) à installer sur un pneu de véhicule (2), avec au moins une section de traction (9) qui, quand la chaîne (1) est installée sur le pneu (2), est posée sur une surface de roulement (10) du pneu (2), et avec au moins un dispositif de fixation (11) qui est relié à la section de traction (9) et qui, quand la chaîne (1) est installée sur le pneu (2), est posé au moins par endroits sur un flanc (8) du pneu (2) et s'étend au moins par endroits dans le sens circonférentiel (14) du pneu (2), étant précisé que le dispositif de fixation, en coupe transversale, présente au moins deux organes de fixation en forme de moyens de traction (15) qui, quand la chaîne (1) est installée sur le pneu (2), se trouvent côte à côte dans le sens radial (16) du pneu (2), **caractérisée en ce que** les deux organes de fixation, ou plus, en forme de moyens de traction (15) qui, quand la chaîne (1) est installée sur le pneu (2), se trouvent côte à côte dans le sens radial (16) du pneu (2), sont enveloppés ensemble.

2. Chaîne de pneu (1) selon la revendication 1, **caractérisée en ce que** les organes de fixation (15) sont fixés les uns par rapport aux autres dans leur position côte à côte grâce à l'enveloppe.

3. Chaîne de pneu (1) selon la revendication 1 ou 2, **caractérisée en ce que** les organes de fixation (15) sont logés dans au moins une gaine (21) qui présente une coupe transversale avec un grand côté (27) et un petit côté (28), et **en ce que** quand la chaîne (1) est montée sur le pneu (2), le grand côté (27) est orienté parallèlement au flanc de pneu (8).

4. Chaîne de pneu (1) selon la revendication 3, **caractérisée en ce que** la gaine (21) est fabriquée à partir d'un matériau rigide.

5. Chaîne de pneu (1) selon l'une des revendications 3 à 4, **caractérisée en ce que** la ou les gaines (21) présentent en coupe transversale un contour extérieur globalement ellipsoïdal.

6. Chaîne de pneu (1) selon l'une des revendications 3 à 5, **caractérisée en ce que** les organes de fixation (15) sont logés dans la gaine (21) en étant mobiles dans leur sens longitudinal (22).

7. Chaîne de pneu (1) selon l'une des revendications 3 à 6, **caractérisée en ce que** plusieurs gaines mobiles les unes par rapport aux autres sont disposées le long des organes de fixation (15).

8. Chaîne de pneu (1) selon l'une des revendications 2 à 7, **caractérisée en ce que** la gaine (21) est placée sur les organes de fixation (15) en étant fixe en rotation par rapport à l'axe longitudinal (22).

9. Chaîne de pneu (1) selon l'une des revendications 3 à 8, **caractérisée en ce qu'**il est prévu à au moins une extrémité (23) de la gaine (21) un moyen de centrage (24) qui est apte à être accouplé à l'extrémité (26) d'une autre gaine (21).

10. Chaîne de pneu (1) selon l'une des revendications 1 à 9, **caractérisée en ce que** les organes de fixation (15) situés côte à côte, en coupe transversale du dispositif de fixation (11), se composent d'au moins un câble extensible élastiquement.

11. Chaîne de pneu (1) selon l'une des revendications 3 à 6 et l'une des revendications 7 à 10, **caractérisée en ce que** la longueur des organes de fixation (15), à l'état non étendu, est plus petite que la longueur totale des gaines (21) disposées sur les organes de fixation (15).

12. Chaîne de pneu (1) selon l'une des revendications 1 à 10, **caractérisée en ce que** l'organe de fixation (15) constitue un moyen de tension.

13. Chaîne de pneu (1) selon l'une des revendications 1 à 11, **caractérisée en ce que** l'organe de fixation (15) est extensible élastiquement au moins par endroits.

14. Chaîne de pneu (1) selon l'une des revendications 1 à 12, **caractérisée en ce que** l'organe de fixation (15) comporte un dispositif de tension mécanique.

15. Chaîne de pneu (1) selon l'une des revendications 1 à 13, **caractérisée en ce que** les gaines (21) sont fixes en rotation les unes par rapport aux autres.
